Europäisches Patentamt

European Patent Office

Office européen des brevets

(11) Publication number: **0 293 935 B1**

(12) **EUROPEAN PATENT SPECIFICATION**

(45) Date of publication of patent specification: **16.09.92**

(51) Int. Cl.⁵: **A23K 1/16, A23K 1/14**

(21) Application number: **88108950.2**

(22) Date of filing: **03.06.88**

(54) **Additive for stock feeds, stock feed containing additive, and process for preparation of additive.**

(30) Priority: **05.06.87 JP 140008/87**
**28.12.87 JP 329885/87**

(43) Date of publication of application:
**07.12.88 Bulletin 88/49**

(45) Publication of the grant of the patent:
**16.09.92 Bulletin 92/38**

(84) Designated Contracting States:
**BE DE FR GB IT NL**

(56) References cited:
**EP-A- 0 171 026**
**CH-A- 570 117**
**US-A- 4 421 852**
**US-A- 4 613 377**

**COMMONWEALTH AGRICULTURAL BU-
REAUX, abstract no. 871493005, ON057-02285,
Nutrition Abs and Rev/Ser B; O. PERMIN-
GEAT et al.: "Growth of pigs on pasture
supplemented with maize and a balanced
feed"**

**DERWENT FILE SUPPLIER WPI/L, AN
79-38953B (20), 1979, Derwent Publications
Ltd, London, GB**

(73) Proprietor: **MITSUI TOATSU CHEMICALS, Inc.**
**2-5 Kasumigaseki 3-chome**
**Chiyoda-Ku Tokyo 100(JP)**

(72) Inventor: **Tamatani, Hiroaki**
**Hinode-cho 18**
**Sunagawa-shi Hokkaido(JP)**
Inventor: **Takahashi, Kazuo**
**Hinode-cho 8**
**Sunagawa-shi Hokkaido(JP)**
Inventor: **Sato, Kazuo**
**Hinode-cho 1**
**Sunagawa-shi Hokkaido(JP)**
Inventor: **Mizushima, Kiyoshi**
**Hinode-cho 22**
**Sunagawa-shi Hokkaido(JP)**
Inventor: **Yoshimi, Fuminobu**
**Aza Naie 575-77, Naie-cho**
**Sorachi-gun Hokkaido(JP)**
Inventor: **Morita, Sohei**
**Yabe-cho 1541, Totsuka-ku**
**Yakohama-shi Kanagawa-ken(JP)**

(74) Representative: **Schüler, Horst, Dr.**
**Patentanwalt, Kaiserstrasse 69**
**W-6000 Frankfurt/Main 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

(1) Field of the Invention

The present invention relates to an additive for stock feeds, a stock feed, and a process for the preparation of the additive. When added to the livestock feed, the additive for stock feeds prevents the diarrhea of stock and contributes to the increase in the body weight of the stock and the efficient utilization of the feed.

(2) Description of the Prior Art

In recent years, the demand for edible meat is increased, and breeders of stock strongly desire an efficient breeding technique. Now, in the field of stock farming, much attention is paid to the efficient production of the stock, and consequently there is the tendency that the greatest possible number of the stock is bred in a limited extent, which often leads to bad breeding environment. In particular, the diarrhea of the infant stock in weaning period has an undesirable influence on the increase in their body weight, and in some cases, the stock die unfortunately. Furthermore, the incomplete development of the stock in their infancy causes a growing period to drag on, so that the efficiency of the stock feed deteriorates and thus profit diminishes.

Accordingly, in order to inhibit the diarrhea and loose passage of the stock, particularly the infant stock, stock feeds containing antibiotics are employed, but the effect of the antibiotics is not considered to be sufficient. In addition, for the prevention of the diarrhea, it is also tried to utilize either or both of various lactic acid bacteria and bifidobacteria.

Another method has been developed in which an additive prepared by subjecting the starting material milk whey to various treatments is added to the stock feed so as to multiply microorganisms present in the alimentary canal of animals.

In addition, there is the report that oligosaccharides are added to the stock feed (Japanese Patent Unexamined publication No. 60-34134).

In Japanese Patent Unexamined Publication No. 52-151787, an agent is disclosed which is prepared by mixing lactulose with bifidobacteria, and this agent heightens an existence ratio of the bacteria during the storage of the stock feed or in intestines of the stock.

A conventional technique regarding the stock feed containing the oligosaccharides is disclosed in Japanese Patent Unexamined Publication No. 61-40754.

Part of the products industrially obtained through the above-mentioned methods are on the market, but it is not believed that their effects are enough. For the prevention of the diarrhea and for the efficient increase in the body weight, there still remain some problems to be solved.

In certain cases, a dosed live bacteria agent is not stably present in intestines of the stock. In the method of using the oligosaccharides, as disclosed in Japanese Patent Unexamined Publication No. 60-34134 mentioned above, the manufacturing cost of an additive containing the oligosaccharides is high, which is unprofitable from a commercial viewpoint. In conclusion, the additive to inhibit the diarrhea and to effectively increase the weight of the stock are too poor to commercially sell. CH-A-570 117 discloses a feed additive for agricultural animals, prepared by flue-drying extraction residues of coffee beans, optionally mixed with chicory, and preferably grinded before added to feedstuffs in 2.5-25% by weight (see col.3 1.35-37, col.4 1.23-47). In EP-A-0 171 026 (JP-A-61 040 754) an inulo- oligosaccharide hydrolysate is disclosed (example 1) which contains only 50% tri- and higher saccharides of the total saccharides.

Inulooligosaccharides in Japanese Patent Unexamined Publication No. 61-40754 are composed mainly of inulobiose ($F_2$), inulotriose ($F_3$), inulotetraose ($F_4$), inulopentaose ($F_5$) or inulohexaose ($F_6$). However, since these inulooligosaccharides are obtained by decomposing inulin with oxalic acid, it mainly contains inulobiose or inulotriose, and does not include much of high-molecular inulosaccharides. Therefore, the inulooligosaccharides disclosed in this publication are not satisfactory to heighten the efectiveness of the stock feed. Furthermore, the raw material of these inulooligosaccharides is jerusalem artichoke, and therefore there is another drawback that the stock do not eat the feed containing it willingly.

Usually, the inulooligosaccharides have excellent characteristics, and for example, it can activate macrophage, develop bifidobacteria, and decrease fat content in the stock. These characteristics are more remarkable in the high-molecular oligosaccharides than in the low-molecular oligosaccharides.

It is known that inulin is present in chicory roots, and chicory flakes are utilized as a filler for coffee. The inulin is a polysaccharides in which 35 fructose moieties are linked via a $\beta$-2,1 bond, and it has a molecular weight of about 5,400 and carries glucose at the terminal thereof.

The usual inulooligosaccharides can be defined as oligosaccharides in which 3 to 6 fructose moieties are linked to each other via the $\beta$-2,1 bond, and it is generally composed of inulotriose ($F_3$), inulotetraose ($F_4$), inulopentaose ($F_5$) or inulohexaose ($F_6$).

The inulooligosaccharides may be prepared by known method, for example, a method of partially decomposing inulin with a dilute acid as described above, or another method of first extracting inulin from a specific plant with warm water, and treating the extracted liquid with an endo-type inulase.

However, these methods are not preferable, because vegetable fiber and trace components which exist in the raw material are lost.

## SUMMARY OF THE INVENTION

According to the present invention, there is provided an additive for stock feeds which is prepared from chicory roots and which can protect livestock from diarrhea and can increase the body weight of the livestock efficiently, a method for preparing the new additive, and a livestock feed containing the additive.

The first aspect of the present invention is directed to an additive for stock feeds containing decomposition products of chicory roots in which the total content of polysaccharides and the inulooligosaccharides of tri- and higher saccharides obtained by decomposing the chicory roots is 40% by weight or more of the total solid content and is 80% by weight or more of the total saccharides.

The decomposition of the chicory roots may be made by heating/drying the chopped chicory roots. Furthermore, the decomposition may be performed by first chopping and grinding the chicory roots into fine pieces, then preparing a slurry of the pieces, and directly enzymatically decomposing the slurry; or alternatively by first chopping the chicory roots into fine pieces, then heating/drying them, adding thereto water to form a slurry, and directly enzymatically decomposing the slurry.

The second aspect of the present invention is directed to a stock feed containing 0.1 to 10% by weight of the aforesaid additive for stock feeds.

The third aspect of the present invention is directed to a method for preparing an additive for stock feeds which comprises the steps of chopping and then heating/drying chicory roots to form chicory flakes, and grinding the chicory flakes.

The fourth aspect of the present invention is directed to a method for preparing an additive for stock feeds which comprises the steps of first chopping and grinding chicory roots to form a slurry, or adding water to chicory flakes prepared by chopping and then heating/drying chicory roots in order to form a slurry, then adding an endo-type inulase to the slurry, and enzymatically decomposing the slurry at 40 to 60°C for 12 to 36 hours.

## DETAILED DESCRIPTION OF THE INVENTION

An object of the present invention is to provide an additive for stock feeds which contains a great deal of inulooligosaccharides of high-molecular components effective to inhibit the diarrhea of livestock and to increase the body weight of the stock efficiently and which further contains vegetable fiber and trace components.

Another object of the present invention is to provide a stock feed containing the aforesaid additive for stock feeds.

Still another object of the present invention is to provide a method for preparing the additive for stock feeds at a low cost.

The inventors of the present application have intensively conducted researches with the intention of solving the above problems. As a result, they have found that when chicory roots which are inulin-containing plants are chopped and then heated/dried under suitable conditions, inulin present in the chicory roots is partially decomposed to produce inulooligosaccharides, and that the inulooligosaccharides can activate macrophage, multiply bifidobacteria and decrease fat in the stock. In addition, they have found that when the inulooligosaccharides prepared by directly decomposing the chicory roots with an endo-type inulase enzyme is added to a stock feed, the diarrhea of infant stock can be inhibited sufficiently, and thus the growth of the stock can be facilitated.

The present invention has been completed on the basis of these knowledges.

The chicory roots used in the present invention are roots of the plant containing inulin called chicory, and in the chicory roots, impurities such as colorant substances and salts are less than in jerusalem artichoke known as the plant containing inulin from old times. This fact is the feature of the chicory roots.

With regard to the chicory roots and jerusalem artichoke, examples of compositions of their extracts with warm water are as follows:

|  | Chicory | Artichoke |
|---|---|---|
| Solid Content (%) | 26.1 | 25.6 |
| Electric Conductivity (μs/cm) | 7,500 | 12,000 |
| Coloring Degree | 27 | 133 |
| Ash (% to solid content) | 4.6 | 5.9 |
| Saccharides (% to solid content) | 70.0 | 68.3 |

The jerusalem artichoke containing a lot of the impurities is not eaten willingly by the stock, and therefore it is not preferable as the raw material of the inulooligosaccharides.

The inulooligosaccharides used in the present invention are the oligosaccharides in which fructoses are linked to each other by a $\beta$-2,1 bond, and it means inulotriose ($F_3$), inulotetraose ($F_4$), inulopentaose ($F_5$) or inulohexaose ($F_6$).

The decomposition of inulin present in the chicory roots into the inulooligosaccharides may be carried out by chopping and then heating/drying the chicory roots.

When the heating temperature in the heating/drying step is too high, or when the heating temperature is held for an excessively long time, the inulooligosaccharides are further decomposed into lower molecules, so that its effectiveness as the stock feed deteriorates and its coloring properties increase. Therefore, the heating conditions should be such that the total content of polysaccharides and the inulooligosaccharidess of tri- and higher saccharides is 40% by weight or more of the total solid content and occupy 80% by weight or more of the total saccharides. To satisfy the above-mentioned heating conditions, it is preferred that the temperature is in the range of 120 to 250°C, the heating time is in the range of 8 to 24 hours, and the product of the temperature and the time is in the range of 1,500 to 3,000 (°C x hours).

In the above heating conditions, a temperature of 180°C a heating time of 12 hours are optimum. When the temperature is lower and when the heating time is shorter than the above-mentioned levels, the decomposition of inulin is insufficient, and inversely these factors are higher and longer the above-mentioned levels, lower molecules are formed, effectiveness as the stock feeds degrades, and coloring power rises inconveniently. The scope of the product of the temperature and time means that if the temperature is high, the heating time should be short, and that if the heating time is long, the temperature should be low.

The composition of the heated/dried chicory flakes regarding the present invention is, for example, as follows:

| Solid Content | about 90% |
|---|---|
| Inulin (nona-and higher saccharides) | 50.4% (to solid content) |
| Oligosaccharides (tri- to octasaccharides) | 15.0% (to solid content) |
| Free Saccharide (Fru) | 0.9% (to solid content) |
| " (Glc) | 0.1% (to solid content) |
| " (Suc) | 3.6% (to solid content) |

The heated/dried chicory flakes used in the present invention originally contain at least 10 weight% or more, no less than about 15%, of the inulooligosaccharides in the solid content. In addition, the inulin in the chicory flakes has a low-molecular weight, and therefore the enzyme decomposition of the inulin is conveniently easy. That is to say, inulin (nona-and higher saccharides) in the above table is different from inulin originally present in chicory roots.

Furthermore, the heated/dried chicory flakes contain fibrous materials, protein and the like derived from the chicory roots. According to the calculation of the data in the above table, the total content of the inulooligosaccharides of the tri and higher saccharides is 15% by weight to the solid content which is at least 10% by weight, the total content of the polysaccharides and the inulooligosaccharides of the tri- and higher saccharides is 65.4% by weight to the solid content which is higher than 40% by weight and the total content of the saccharides is 93.4% by weight which is higher than 80% by weight. Many analyses for the heated/dried chicory flakes support these data.

In the chicory roots, an exo-type inulase is present, and while the chicory roots are preserved, the inulin in the roots is decomposed gradually with the enzyme to form fructose. If such a heat treatment as described above is previously made, the exo-type inulase can be deactivated to minimize the production of fructose. The saccharides and other components present in the chicory flakes are as follows:

| Solid Content | about 90% |
|---|---|
| Saccharides | |
| Mono- and disaccharides | 5% (to solid content) |
| Tri- to octasaccharides | 15% (to solid content) |
| Nona- and higher saccharides | 50% (to solid content) |
| Fibrous Substances | 12% (to solid content) |
| Protein | 12% (to solid content) |
| Ash | 5% (to solid content) |
| Fat | 1% (to solid content) |

The chicory flakes obtained in the above-mentioned manner can be directly used as the additive for stock feeds.

The chopped chicory roots or the chicory flakes prepared by the above thermal decomposition may be further enzymatically decomposed.

In the case that the thus prepared chicory flakes are used as the raw material of the present invention, the product can be obtained which contains a good deal of the inulooligosaccharides having a polymerization degree of 3 to 7. Therefore, the method of using the chicory flakes is more preferable than the method of performing the enzymatic decomposition immediately after the chopping of the chicory roots, because the above chicory flakes contain no less than 15% of the inulooligosaccharides, as shown in the above table.

The enzymatic decomposition is carried out as follows:

First, the chicory roots are chopped and ground to prepare a slurry, or alternatively the chicory flakes are finely ground and then mixed with water to prepare a slurry, or they are roughly ground and mixed with hot water, followed by stirring to prepare a slurry. If necessary, a further treatment may be made by the use of pectinase and/or cellulase. Afterward, an endo-type inulase is added to the slurry, and the enzymatic decomposition is then performed at a temperature of 40 to 60°C for 12 to 36 hours, so that the product is obtained in which 50% or more of the solid content is the inulooligosaccharides.

Usable examples of the endo-type inulase include enzymes produced by fungi such as Aspergillus genus(A. niger and the like) and Penicillium genus (P. trzebinskii and the like), and bacteria such as Bacillus genus (B. circulans and the like). In a preferable case, the endo-type inulase in which an optimum temperature is from 30 to 60°C and an optimum pH is from 4 to 7 is used, so that the Inulooligosaccharides is effectively produced from the chicory flakes. In the practical enzyme decomposition, it is preferable that the temperature of the enzymatic decomposition is high for the sake of preventing contamination with various bacteria. Therefore, the enzymatic decomposition is performed at a temperature of 40 to 60°C, as described above. With regard to the ratio of the endo-inulase/the exo-inulase, if an enzyme solution of I/S > 10 (I is an inulin-decomposing activity and S is a sucrose-decomposing activity) is used, the amount of the produced fructose can be decreased.

The above-mentioned sucrose-decomposing activity (S activity), i.e. an exo-type inulase activity, may be measured as follows:

An enzyme is first added to a 0.75% sucrose solution containing an acetic acid buffer solution of pH 5.0, and reaction is then performed at 50°C for 30 minutes in order to form reducing sugars. Afterward, the reducing sugars are quantitatively analyzed by a 3,5-dinitrosalicylic acid process, and the activity is obtained on the basis of the analyzed value. An enzyme unit is represented by the amount of an enzyme which can produce 2 $\mu$mole of the reducing sugar for 1 minute in 1 ml of a culture medium.

The inulin-decomposing activity (I activity), i.e. an endo-type inulase activity, can be obtained in the same procedure as in the above measurement of the S activity with the exception that a 0.75% inulin solution is employed. However, an enzyme unit of the I activity is the amount of an enzyme which can produce 1 $\mu$mole of the reducing sugar.

The endo-type inulase activity ratio of the enzyme solution can be represented by the ratio (I/S) of the above-mentioned S and I activities, and when the enzyme solution of I/S>10 is used, it is possible to reduce the production of fructose.

The additive of the present invention comprises decomposition products of chicory roots in which the total content of polysaccharides and the inulooligosaccharides of tri- and higher saccharides is 40% by weight or more of the total solid content and occupy 80% by weight or more of the total saccharides, and furthermore includes fibrous substances and trace components originally present in the chicory roots.

It comprises the additive which is prepared by chopping and then heating/drying chicory roots and which includes nona- and higher saccharides at least 30 weight%, no more than 50 weight%, and oligosaccharides ( tri- to octasaccharides) at least 10 wt.% , no more than 15 wt.%, based on the solid content. This additive is advantageous as low cost to manufacture.

It also comprises the additive which is prepared by the following process. The chicory roots are chopped and ground to prepare a slurry (water is not always added in the grinding step, but the addition of water is acceptable), or the above-mentioned chicory flakes are finely ground, followed by adding water thereto in order to prepare a slurry. Afterward, this slurry is directly enzymatically decomposed, thereby obtaining crude oligosaccharides in which tri- to octasaccharides are mainly contained in an amount of about 60% by weight. Thus obtained crude oligosaccharides further can contain fibrous substances and trace components originally present in the chicory roots.

The oligosaccharides in which the tri- to octasaccharides are contained in large quantities can be used as the additive for stock feeds without any further treatment, but these oligosaccharides may be mixed with a material prepared by grinding and drying the chicory roots in an ordinary manner or an additive for stock feeds prepared by heating/-drying the chicory roots in accordance with the present invention, so that the additive for stock feeds can be obtained in which tri- to octasaccharides are contained in an amount of 30 to 60% by weight.

The additive may be mixed with a stock feed in an amount of 0.1 to 10% by weight in order to prepare a feed for the infant stock. When the content of the additive is less than 0.1% by weight, the effect of the additive is not appreciated, and when it is in excess of 10% by weight, a cost rises disadvantageously.

The additive for stock feeds of the present invention contains a good deal of the inulooligosaccharides in which effective high-molecular components are present in large quantities, and it further contains vegetable fiber and protein derived from the chicory roots. Therefore, when the feed containing the additive is fed to the stock, the diarrhea of the infant stock can be effectively prevented by functions of the inulooligosaccharides such as macrophage activation, multiplication of bifidobacteria in intestines and decrease in fat in stock bodies, with the result that the weight of the stock increases effectively and thus a feed demand ratio ( the weight of feed needed to increase the unit weight of the stock ) can be lowered.

In the additive prepared by directly decomposing the slurry of the chopped and ground chicory roots or the aqueous slurry of the finely ground chicory flakes, the effective inulooligosaccharides of tri- to octasaccharides can be present in a noticeably high ratio, and vegetable fiber and trace components such as protein derived from the chicory roots are still contained therein. In the present invention, there is neither loss of extraction nor an increase in cost as in the case that inulin is extracted with warm water, and there is not the disadvantage that amounts of fructose and low molecular oligosaccharides increase as in the case that a partial decomposition is performed with a dilute acid. In consequence, it is fair to say that the additive of the present invention is industrially profitable.

In the present invention, the method of heating/drying the chicory roots can be achieved only by chopping, heating/drying and grinding the chicory roots. Accordingly, a manufacturing cost is very low. Furthermore, the method of directly decomposing the slurry with an enzyme does not require any extraction of inulin, decolorization and desalting, and according to this method, the inulooligosaccharides containing a good deal of high-molecular components can be effectively obtained at a low cost.

EXAMPLES

Now, the present invention will be described in detail in reference to examples.

Example 1

First, 30 kg of chicory roots was chopped into pieces having a diameter of about 5 cm, and these pieces were then dried at 180°C for 12 hours in a dryer in order to form 8 kg of chicory flakes. In the flakes, a solid content was 92.1% and saccharides were present in an amount of 65.4% of the solid content. The composition of the saccharides is set forth in Table 1. The results in this table indicate that contents of monosaccharide and disaccharide are low.

Table 1

| (Composition of Saccharides in Chicory Flakes) | |
| --- | --- |
| Monosaccharide (Glc, Fru) | 1.2 wt.% |
| Disaccharide (Suc, inulobiose) | 2.2 wt.% |
| Trisaccharide | 4.8 wt.% |
| Tetrasaccharide | 5.4 wt.% |
| Pentasaccharide | 7.6 wt.% |
| Hexa- to octasaccharides | 23.3 wt.% |
| Nona- and higher saccharides | 55.4 wt.% |

The thus formed chicory flakes were ground and dried in order to prepare an additive for stock feeds of the present invention. when used, this additive will be added to a usual feed in an amount of 0.1 to 10% by weight.

For tests, three-week-old piglets were fed with feeds containing 1% by weight and 5% by weight of the additive of the present invention and a feed containing no additive. Each group of 6 pigs was allowed to grow for 4 weeks, and afterward, average weight increment, feed demand ratio and occurrence of diarrhea were inspected. The results are set forth in Table 2.

## Table 2

| Amount of Additive (%) | Average Weight increment (kg) | Feed Demand ratio | Occurrence of Diarrhea |
| --- | --- | --- | --- |
| 0 | 9.3 | 1.6 | ++ |
| 1 | 10.7 | 1.5 | − |
| 5 | 12.1 | 1.4 | − |

++: Very often

−: Very little

As is apparent from the above results, with regard to the pigs to which the additive of the present invention has been fed, the average weight increments are 1.1 to 1.3 times as much as those of the pigs to which no additive has been fed, and the feed demand ratios are also lower. In addition, the occurrence of the diarrhea is much less than in the pigs having no additive.

Example 2

To finely ground chicory flakes (which had passed through 32 mesh) were added 25 liter of water to prepare a slurry containing about 20wt.% of a solid content. Then, 36,000 units (as I activity) of an endo--type inulase produced by culturing Penicillium trzebinskii (FERM P-8706) was added to the slurry, and enzymatic decomposition was performed at 50°C for 12 hours. Afterward, dehydration, drying and grinding followed in order to obtain 5.5 kg of inulooligosaccharides additive of the present invention.

The composition of the thus obtained additive is set forth in Table 3. The results in this table indicate that the main components of the additive are tri- to heptasaccarides and the content of monosaccharide is low.

Table 3

| (Composition of Additive) | |
|---|---|
| Monosaccharide (Glc, Fru) | 3.0% |
| Disaccharide | 7.3% |
| Trisaccharide | 22.9% |
| Tetrasaccharide | 21.5% |
| Pentasaccharide | 23.2% |
| Hexa- and heptasaccharides | 18.6% |
| Octa and higher saccharides | 3.5% |

Generally, the additive of the present invention will be added to a usual feed in an amount of 0.1 to 10% in order to prepare a stock feed.

In this example, the additive was added to a stock feed in an amount of 0.1 to 5%, and each group of 10 weaned piglets was allowed to grow for 30 days by the use of the additive-containing feed. The results are set forth with average values in Table 4.

**Table 4   (Growth Test Results of Piglets)**

| Amount of Additive (%) | Average Weight Increment (kg) | Feed Demand Ratio | Occurrence of Diarrhea |
|---|---|---|---|
| 0 | 1.0 | 1.0 | ++ |
| 0.1 | 1.1 | 0.92 | + |
| 0.5 | 1.2 | 0.85 | − |
| 1.0 | 1.1 | 0.88 | − |
| 5.0 | 1.2 | 0.88 | − |

++: Very often
 +: Little
 −: Very little

As is apparent from the results in Table 4, with regards to the pigs to which the additive of the present invention has been fed, the body weight increments are greater than in the pigs of no additive, and the feed demand ratios are also lower. Furthermore, it is definite that the occurrence of diarrhea in inhibited remarkably by the additive.

For another test, the additive prepared above was also applied to calves.

Four groups each having six 2 to 3-week-old calves were allowed to grow for 50 days. One group was fed with a commercial available milk without any additive, and the other groups were fed with stock feeds containing the additive of the present invention in amounts of 0.1 to 5%. Weight crements and feed demand ratios were calculated from weights of the calves and intakes of the stock feeds before and after the test, and blood was sampled at certain intervals to seek amounts of cholesterol in the blood.

As a result, in the groups of the calves to which the additive of the present invention had been fed, the body weight increments were 1.1 to 1.3 times, the feed demand ratios were 0.87 to 0.96 times, and the amounts of cholesterol were 0.72 to 0.90 times as much as in the calf group without any additive. Accordingly, it can be concluded that when the stock feed containing the additive of the present invention is fed to the calves, the growth can be facilitated and the meat quality can be improved owing to the decrease in the fat.

Example 3

As described hereinbefore, the inulooligosaccharides contained in the stock feed disclosed in Japanese Patent Unexamined Publication No. 61-40754 is prepared by decomposing a jerusalem artichoke raw material with oxalic acid and filtering the material to remove vegetable fiber therefrom. However, the thus obtained inulooligosaccharides contains many salts and impurities, and therefore it is not eaten by stock willingly.

Now, for the comparison of the jerusalem artichoke and chicory roots, a test was made.

Each of crude oligosaccharides powders prepared by directly enzymatically decomposing the chicory roots and jerusalem artichoke was added to a commerically available stock feed for piglets in an amount of 0.5% by weight, and the respective stock feeds were fed to the piglets.

Three groups each having three 4-week-old piglets were tested. That is, the crude oligosaccharides prepared from the chicory roots was fed to the first group, the crude oligosaccharides prepared from the jerusalem artichoke was fed to the second group, and no oligosaccharide was fed to the third group. Each stock feed was fed freely thereto for 10 days, and intakes of the stock feeds were recorded. This test was repeated 3 times.

Comparison was made on the basis of average values of the three tests. When the intake of the stock feed without any crude oligosaccharide was regarded as 100, the intake of the chicory group was 120, and that of the artichoke group was 102. This result indicates that the stock feed containing the chicory oligosaccharides is eaten more willingly by the stock than the feed containing the artichoke oligosaccharides. Therefore, it is fair to say that the chicory roots are more excellent than the jerusalem artichoke as the raw material.

**Claims**

1. An additive for stock feeds containing decomposition products of chicory roots, in which products the total content of polysaccharides and the inulooligosaccharides of tri- and higher saccharides is 40% by weight or more of the total solids content and is 80% by weight or more of the total saccharides.

2. An additive for stock feeds as claimed in claim 1, prepared by grinding chicory flakes, which are obtained by chopping and heating/drying chicory roots.

3. A stock feed containing 0.1 to 10% by weight of said additive for stock feeds described in Claim 1.

4. An additive for stock feeds as claimed in claim 1, which is prepared by directly enzymatically decomposing a slurry of chopped and ground chicory roots.

5. An additive for stock feeds which is prepared by mixing chicory flakes, obtained by chopping and then heating/drying said chicory roots, with said additive for stock feeds described in claim 4.

6. A stock feed containing 0.1 to 10% by weight of said additive for stock feeds described in Claim 4.

7. An additive for stock feeds as claimed in claim 1, which is prepared by directly enzymatically decomposing a slurry of chicory flakes, obtained by chopping and then heating/drying chicory roots.

8. An additive for stock feeds which is prepared by mixing chicory flakes, obtained by chopping and then heating/drying chicory roots, with said additive for stock feeds described in claim 7.

9. A stock feed containing 0.1 to 10% by weight of said additive for stock feeds described in Claim 7.

10. A process for preparing an additive for stock feeds as claimed in claim 1, which comprises the steps of chopping and then heating/drying chicory roots in order to form chicory flakes, and grinding said chicory flakes.

**11.** A process for preparing an additive for stock feeds according to Claim 10 wherein said heating/drying step is carried out at a temperature of 120 to 250°C for 8 to 24 hours, and the product of said temperature and time is in the range of 1,500 to 3,000 (°C x hours).

**12.** A process for preparing an additive for stock feeds as claimed in claim 1, which comprises the steps of chopping and grinding chicory roots to form a slurry, adding an endo-type inulase to said slurry, and enzymatically decomposing said chicory roots at a temperature of 40 to 60°C for 12 to 36 hours.

**13.** A process for preparing an additive for stock feeds according to Claim 12 wherein said endo-type inulase has an optimum temperature of 30 to 60°C and an optimum pH of 4 to 7.

**14.** A process for preparing an additive for stock feeds according to Claim 12 wherein the endo-type inulase-ratio, represented by the ratio of an inulin-decomposing activity/a sucrosedecomposing activity, which is an endo-inulase / exo inulase ratio, is more than 10.

**15.** A process for preparing an additive for stock feeds as claimed in claim 1, which comprises the steps of chopping and then heating/drying chicory roots to form chicory flakes, adding water to said chicory flakes to form a slurry, adding an endo-type inulase to said slurry, and enzymatically decomposing said chicory flakes in said slurry at a temperature of 40 to 60°C for 12 to 36 hours.

**16.** A process for preparing an additive for stock feeds according to Claim 15 wherein said endo-type inulase has an optimum temperature of 30 to 60°C and an optimum pH of 4 to 7.

**17.** A process for preparing an additive for stock feeds according to Claim 15 wherein the endo-type inulase ratio, represented by the ratio of an inulin-decomposing activity/a sucrosedecomposing activity which is an endo-inulase/exo-inulase ratio, is more than 10.

**Patentansprüche**

**1.** Zusatz für Viehfutter, der Zersetzungsprodukte von Zichoriewurzeln enthält, wobei in den Produkten der Gesamtgehalt an Polysacchariden und den Inulooligosacchariden von tri- und höheren Sacchariden 40 Gew.-% oder mehr des gesamten Feststoffgehaltes und 80 Gew.-% oder mehr der gesamten Sacchariide beträgt.

**2.** Zusatz für Viehfutter nach Anspruch 1, der durch Mahlen von Zichorieflocken, die durch Häckseln und Erhitzen/Trocknen von Zichoriewurzeln erhalten worden sind, hergestellt worden ist.

**3.** Viehfutter, das 0,1 bis 10 Gew.-% des in Anspruch 1 beschriebenen Zusatzes für Viehfutter enthält.

**4.** Zusatz für Viehfutter nach Anspruch 1, der durch direktes enzymatisches Zersetzen einer Aufschlämmung von gehäckselten und gemahlenen Zichoriewurzeln hergestellt ist.

**5.** Zusatz für Viehfutter, der durch Mischen von Zichorieflocken, die durch Häckseln und dann Erhitzen/Trocknen der Zichoriewurzeln erhalten worden sind, mit dem Zusatz für Viehfutter, der in Anspruch 4 beschrieben worden ist, hergestellt worden ist.

**6.** Viehfutter, das 0,1 bis 10 Gew.-% des in Anspruch 4 beschriebenen Zusatzes für Viehfutter enthält.

**7.** Zusatz für Viehfutter nach Anspruch 1, der durch direktes enzymatisches Zersetzen einer Aufschlämmung von Zichorieflocken, die durch Häckseln und dann Erhitzen/Trocknen von Zichoriewurzeln erhalten worden sind, hergestellt worden ist.

**8.** Zusatz für Viehfutter, der durch Mischen von Zichorieflocken, die durch Häckseln und dann Erhitzen/Trocknen von Zichoriewurzeln erhalten worden sind, mit dem in Anspruch 7 beschriebenen Zusatz für Viehfutter hergestellt worden ist.

**9.** Viehfutter, das 0,1 bis 10 Gew.-% des in Anspruch 7 beschriebenen Zusatzes für Viehfutter enthält.

**10.** Verfahren zur Herstellung eines Zusatzes für Viehfutter nach Anspruch 1, das die Schritte des Häckselns und nachfolgenden Erhitzens/Trocknens von Zichoriewurzeln, um Zichorieflocken zu bilden, und Mahlens der Zichorieflocken umfaßt.

**11.** Verfahren zur Herstellung eines Zusatzes für Viehfutter nach Anspruch 10, bei dem der Erhitzungs-/Trocknungsschritt bei einer Temperatur von 120 bis 250°C über 8 bis 24 Stunden durchgeführt wird und das Produkt dieser Temperatur und dieser Zeit in dem Bereich von 1500 bis 3000 (Grad Celsius x Stunden) liegt.

**12.** Verfahren zur Herstellung eines Zusatzes für Viehfutter nach Anspruch 1, das die Schritte des Häckselns und Mahlens von Zichoriewurzeln, um eine Aufschlämmung zu bilden, Zugeben einer Inulase vom Endo-Typ zu der Aufschlämmung und enzymatisches Zersetzen der Zichoriewurzeln bei einer Temperatur von 40 bis 60°C über 12 bis 36 Stunden umfaßt.

**13.** Verfahren zur Herstellung eines Zusatzes für Viehfutter nach Anspruch 12, bei dem die Inulase vom Endo-Typ eine optimale Temperatur von 30 bis 60°C und einen optimalen pH von 4 bis 7 hat.

**14.** Verfahren zur Herstellung eines Zusatzes für Viehfutter nach Anspruch 12, bei dem der Anteil der Inulase vom Endo-Typ, der durch das Verhältnis einer Inulin-Zersetzungsaktivität/einer Sucrose-Zersetzungsaktivität, welches ein Endo-Inulase/Exo-Inulase-Verhältnis ist, größer als 10 ist.

**15.** Verfahren zur Herstellung eines Zusatzes für Viehfutter nach Anspruch 1, das die Schritte des Häckselns und dann Erhitzens/Trocknens von Zichoriewurzeln, um Zichorieflocken zu bilden, Zugabe von Wasser zu diesen Zichorieflocken, um eine Aufschlämmung zu bilden, Zugabe einer Inulase vom Endo-Typ zu dieser Aufschlämmung und enzymatisches Zersetzen der Zichorieflocken in dieser Aufschlämmung bei einer Temperatur von 40 bis 60°C über 12 bis 36 Stunden umfaßt.

**16.** Verfahren zur Herstellung eines Zusatzes für Viehfutter nach Anspruch 15, bei dem die Inulase vom Endo-Typ eine optimale Temperatur von 30 bis 60°C und einen optimalen pH von 4 bis 7 hat.

**17.** Verfahren zur Herstellung eines Zusatzes für Viehfutter nach Anspruch 15, bei dem der Anteil der Inulase vom Endo-Typ, der durch das Verhältnis einer Inulin-Zersetzungsaktivität/einer Sucrose-Zersetzungsaktivität, welches ein Endo-Inulase/Exo-Inulase-Verhältnis ist, größer als 10 ist.

**Revendications**

**1.** Un additif pour aliments pour bétail contenant des produits de décomposition de racines de chicorée, dans lesquels produits la teneur totale des polysaccharides et des inulo-oligosaccharides de trisaccharides et de saccharides supérieurs est de 40 % en poids ou plus de la teneur totale en matières sèches et est de 80 % en poids ou plus des saccharides totaux.

**2.** Un additif pour aliments pour bétail selon la revendication 1 préparé par broyage de flocons de chicorée que l'on a obtenus par découpage et chauffage/séchage de racines de chicorée.

**3.** Un aliment pour bétail contenant de 0,1 à 10 % en poids dudit additif pour aliments pour bétail décrit dans la revendication 1.

**4.** Un additif pour aliments pour bétail selon la revendication 1 qui est préparé par décomposition enzymatique directe d'une suspension de racines de chicorée découpées et broyées.

**5.** Un additif pour aliments pour bétail qui est préparé par mélange de flocons de chicorée, obtenus par découpage puis chauffage/séchage desdites racines de chicorée, avec ledit additif pour aliments pour bétail décrit dans la revendication 4.

**6.** Un aliment pour bétail contenant 0,1 à 10 % en poids dudit additif pour aliments pour bétail décrit dans la revendication 4.

**7.** Un additif pour aliments pour bétail selon la revendication 1, qui est préparé par décomposition enzymatique directe d'une suspension de flocons de chicorée obtenus par découpage, puis chauffage/séchage de racines de chicorée.

**8.** Un additif pour aliments pour bétail qui est préparé par mélange de flocons de chicorée, obtenus par découpage puis chauffage/séchage de racines de chicorée, avec ledit additif pour aliments pour bétail décrit dans la revendication 7.

**9.** Un aliment pour bétail contenant 0,1 à 10 % en poids dudit additif pour aliments pour bétail décrit dans la revendication 7.

**10.** Un procédé pour préparer un additif pour aliments pour bétail selon la revendication 1, qui comprend les étapes de découpage, puis de chauffage/séchage de racines de chicorée pour former des flocons de chicorée et broyage desdits flocons de chicorée.

**11.** Un procédé pour préparer un additif pour aliments pour bétail selon la revendication 10, dans lequel ladite étape de chauffage/séchage est effectuée à une température de 120 à 250°C pendant 8 à 24 heures et le produit de cette température et de ce temps est dans la gamme de 1 500 à 3 000 (°C x heures).

**12.** Un procédé pour préparer un additif pour aliments pour bétail selon la revendication 1, qui comprend les étapes de découpage et de broyage de racines de chicorée pour former une suspension, addition d'une inulase de type endo à ladite suspension et décomposition enzymatique desdites racines de chicorée à une température de 40 à 60°C pendant 12 à 36 heures.

**13.** Un procédé pour préparer un additif pour aliments pour bétail selon la revendication 12, dans lequel ladite inulase de type endo a une température optimale de 30 à 60°C et un pH optimal de 4 à 7.

**14.** Un procédé pour préparer un additif pour aliments pour bétail selon la revendication 12, dans lequel le rapport de l'inulase de type endo, représenté par le rapport d'une activité de décomposition de l'inuline/une activité de décomposition du saccharose, qui est un rapport endo-inulase/exo-inulase, est supérieur à 10.

**15.** Un procédé pour préparer un additif pour aliments pour bétail selon la revendication 1, qui comprend les étapes de découpage, puis de chauffage/séchage de racines de chicorée pour former des flocons de chicorée, addition d'eau auxdits flocons de chicorée pour former une suspension, addition d'une inulase de type endo à ladite suspension et décomposition enzymatique desdits flocons de chicorée dans ladite suspension à une température de 40 à 60°C pendant 12 à 36 heures.

**16.** Un procédé pour préparer un additif pour aliments pour bétail selon la revendication 15, dans lequel ladite inulase de type endo a une température optimale de 30 à 60°C et un pH optimal de 4 à 7.

**17.** Un procédé pour préparer un additif pour aliments pour bétail selon la revendication 15, dans lequel le rapport de l'inulase de type endo, représenté par le rapport d'une activité de décomposition de l'inuline/une activité de décomposition du saccharose, qui est un rapport endo-inulase/exo-inulase, est supérieur à 10.